# EUROPEAN PATENT APPLICATION

(11) **EP 3 173 827 A1**
(43) Date of publication of application: **31.05.2017**
(21) Application number: 15825458.1
(22) Date of filing: 24.07.2015
(51) Int. Cl.: G02B 1/11

(54) **METHOD FOR FORMING FUNCTIONAL COATING LAYER ON OPTICAL LENS AND OPTICAL LENS WITH FUNCTIONAL COATING LAYER FORMED THEREON**

(30) Priority: 25.07.2014 KR 20140094962
(71) Applicant: KOC Solution Co. Ltd., Daejeon 305-380 (KR)
(72) Inventor: JANG, Dong Gyu, Daejeon 302-777 (KR)
(74) Representative: Serjeants LLP
(86) International application number: PCT/KR2015/007743
(87) International publication number: WO 2016/013907

(57) **Abstract**

Disclosed is a novel method of producing a functional coating layer on an optical lens, and an optical lens including a functional coating layer formed thereon, produced by the method. Provided is a method of forming a functional coating layer on an optical lens including printing or coating a functional coating material on a base film to form a functional coating layer, drying or curing the functional coating layer, and transferring the dried or cured functional coating layer from the base film to an optical lens. In accordance with the present invention, functionality such as photochromism or self-healing can be imparted to the completed lens using an additional simple process. The method according to the present invention has a high production efficiency, can realize mass-production and can greatly reduce production costs, as compared to conventional methods.

## Description

### [Technical Field]

The present invention relates to a novel method of producing a functional coating layer on an optical lens and an optical lens including a functional coating layer formed thereon, produced by the method.

### [Background Art]

A coating layer having various functions such as photochromism, scratch resistance, improved surface hardness, anti-reflection or the like is formed on an optical lens including a lens of eyeglasses depending on certain application or intention. This coating process may be a major factor causing deterioration in overall production efficiency of optical lenses and has a problem of difficulty in securing coating uniformity when forming on a lens having an irregular thickness, such as a lens of eyeglasses. In particular, for a photochromic lens, a thick part thereof becomes deeper in color due to presence of greater amount of a photochromic material therein, while a thin part thereof becomes lighter in color and has more sensitive photochromism, thus resulting in non-uniformity in terms of color and photochromic functions of the lens.

To solve these problems, there have been suggested a variety of conventional coating methods. Japanese Patent Laid-open No. 3643606 discloses that a photochromic transfer sheet including a photochromic layer placed on a base sheet is disposed on a mold having a lens-shaped inner wall, the photochromic transfer sheet is pushed with a plate having a shape coupled to the mold and contacts the inside of the mold, and a lens polymer material is injected thereto and polymerized to obtain a lens having a photochromic transfer sheet attached thereto. After removal of the mold, the base sheet is detached from the photochromic transfer sheet, thereby obtaining a photochromic lens including the photochromic layer attached to and coated on a lens.

The currently and generally used functional coating method is spin coating, which is a rotational coating method of depositing a liquid coating material in the center of a rotating lens. In this method, the coating material is diffused on the surface of a rotating lens based on centrifugal force. Then, the lens stops rotating and the coating material is cured by thermosetting or UV setting to complete coating. Spin coating has advantages of excellent coating performance and relatively uniform coating as compared to conventionally used coating methods, while it is disadvantageous in terms of coating thickness non-uniformity which results from the fact that coating is thicker on an edge of the lens than on the center of the lens, because a coating material is placed on a protruding surface of the molded lens and centrifugal force is applied to allow the coating to flow from the center of the lens toward the edge of the lens. Other disadvantages of spin coating are that a molded lens should be fixed to a holder, this holder should be rotated at a predetermined rate during spin coating, and a process efficiency is low and thus overall lens production efficiency is deteriorated because, after a lens starts rotating before coating, a time for the lens to stop rotating after completion of coating is needed.

### [Prior Art]

### [Patent Document]

(Patent Document 1) Japanese Patent Laid-open No. 3643606
(Patent Document 2) Korean Patent No. 10-0912993
(Patent Document 3) Korean Patent No. 10-0982076
(Patent Document 4) Korean Patent No. 10-1167367
(Patent Document 5) Korean Patent Laid-open No. 10-2011-0099741

### [Disclosure]

### [Technical Problem]

Therefore, in a novel attempt to solve the above problems, it is one object of the present invention to form a functional coating layer on an optical lens. In particular, it is another object of the present invention to provide a novel and easy coating method which allows for photochromic coating or self-healing coating and is suitable for mass-production. In addition, it is another object of the present invention to provide an optical lens including a functional coating layer uniformly and stably formed on the lens, produced by the method.

### [Technical Solution]

In accordance with the present invention, the above and other objects can be accomplished by the provision of a method of forming a functional coating layer on an optical lens including:
printing or coating a functional coating material on a base film to form a functional coating layer;
drying or curing the functional coating layer; and
transferring the dried or cured functional coating layer from the base film to an optical lens.

In another aspect of the present invention, provided is an optical lens including a functional coating layer formed thereon, obtained by the method. The optical lens includes a photochromic lens, a lens of eyeglasses for vision correction, sunglasses, sports goggles, industrial protective eyeglasses, a camera optical lens, a prism lens, an LED lens, an automobile headlight and the like.

### [Effects of the Invention]

In accordance with the present invention, a photochromic coating layer or a self-healing coating layer can be formed on an optical lens in an easier manner, and the method according to the present invention has high production efficiency, is suitable for mass-production and can remarkably reduce production costs, as compared to conventional methods. In accordance with the present invention, functionality such as photochromism or self-healing can be imparted to the completed lens through an additional simple process.

### [Best Mode]

The method of forming a functional coating layer on an optical lens according to the present invention includes printing a functional coating material on a base film, drying or curing the printed functional coating layer, and transferring the dried or cured functional coating layer to an optical lens. The method of the present invention may further include curing the functional coating layer transferred to the optical lens by heat or UV, and forming an adhesive layer on the dried or cured functional coating layer or the like, if necessary. Hereinafter, the respective layers will be described in detail.

### Forming functional coating layer on base film

The base film used herein may be a base film commonly used as a transfer film. The base film preferably further includes a release layer formed thereon. Examples of the base film include polyester, polypropylene, polyamide, polyethylene and triacetate resins and mixtures thereof. The release layer functions to easily remove the printing layer (or coating layer) from the base film. The release layer may be made of, for example, wax, silicone, melamine, Teflon, unsaturated urethane or the like. The release layer preferably has a thickness of about 0.01 µm to about 1.5 µm.

The functional coating material is a coating liquid for forming a functional coating layer, which varies depending on the target functional coating layer. The target functional coating layer of the present invention may be a photochromic coating layer, a self-healing coating layer, a hard coating layer, a total-reflection coating layer, a water repellent layer, a stain-resistant layer or the like. In particular, the method of the present invention is suitable for forming a photochromic coating layer and a self-healing coating layer. Respective coating liquid compositions can be used by an ordinary skilled person from well-known compositions. When the functional coating layer is a photochromic coating layer, the functional coating material preferably includes a photochromic compound and a binder. The binder may preferably include one or more selected from acryl-, aryl-, urethane-, thiourethane-, epoxy-, thiosulfide- and EVA-based monomers, oligomers and polymers. Among the binders, acryl preferably includes a compound represented by the following Formula 1 or Formula 2. There are various well-known photochromic compounds, for example, an inorganic compound such as silver halide or an organic compound such as spiropyran, spiroxazine, chromene, fulgide, azo, fulgimide or diarylethene. Any photochromic compound may be used in the present invention so long as it can impart photochromism to a lens. The photochromic compound may be suitably selected in consideration of color or the like. Specifically, examples of the photochromic compound include Reversacol Platinate Purple (Spiroxazine)(available from James Robinson Inc.), Reversacol Sea Green (Spiropyran)(available from James Robinson Inc.), Reversacol Solar Yellow (Chromene)(available from James Robinson Inc.), Reversacol Berry Red (Spiroxazine)(available from James Robinson Inc.), benzopyran, naphthopyran (naphtho [1,2b], naphtho [2,1-b]), spiro-9-fluoreno[1,2-b]pyran, phenanthropyran, spiro (indoline) quinopy, indeno-fused naphthopyran, benzoxazine, naphthoxazine, spiro (indoline) pyrido-benzoxazine and the like. 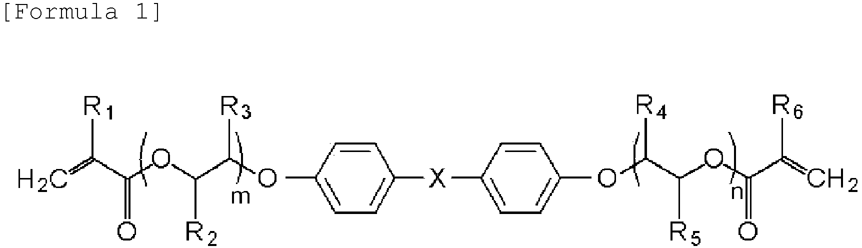 wherein R₁, R₂, R₃, R₄, R₅ and R₆ represent H or CH₃; X represents C₁ to C₄ straight alkyl, C(CH₃)₂, C(CH₃) (C₆H₅) or C(CH₃)₂-C₆H₄-C(CH₃)₂; and m+n is 2 to 5, 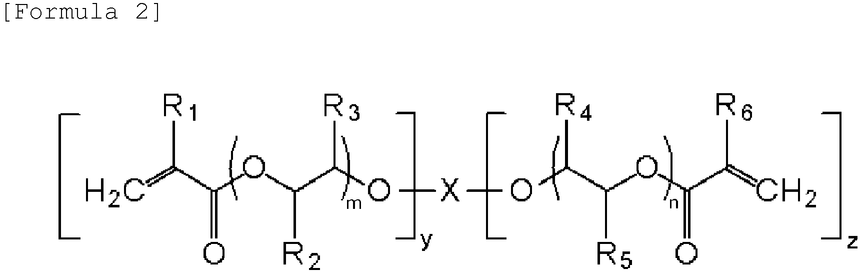 wherein R₁, R₂, R₃, R₄, R₅ and R₆ represent H or CH₃; m represents 0 to 5, n represents 0 to 5, m+n is 0 to 6; y represents 0 to 5, z represents 0 to 5, y+z is 1 to 6; and X represents a C₁ to C₁₆ aliphatic moiety, a C₁ to C₁₆ aliphatic moiety containing one or more hydroxyl groups, a C₁ to C₁₆ aliphatic moiety containing one or more nitrogen or oxygen atoms, a C₁ to C₁₆ aliphatic moiety containing one or more hydroxyl groups and one or more nitrogen or oxygen atoms, a cyclic moiety, or a heterocyclic moiety containing one or more oxygen atoms.

Printing or coating may be used to form the functional coating layer. Printing may be carried out by an ordinary method of printing a transfer film. Coating may be carried out by a variety of methods such as micro gravure, slot die, roll, comer, gravure coater or the like. Various methods such as impregnation, application, spraying and spin coating may be used. In an embodiment of the present invention, a PCL-750 model coater produced by P & T Co., Ltd. was used, slot die was used as a coating type and hot-air drying was used as a drying method. Preferably, upon printing or coating, the functional coating layer may be made into a round lens shape. At this time, a uniform coating layer can be formed on the lens by printing or coating while taking into consideration a stretched surface depending on the shape of the surface of the optical lens which will be transferred in the subsequent process.

### Semi-curing functional coating layer

After forming the functional coating layer on the base film as described above, it is dried or cured. The term "drying" used in the present invention includes all types of drying from weak drying allowing a material not to flow to strong drying allowing a surface of a material to completely harden. The term "curing" used in the present invention includes all types of drying from semi-curing to complete curing. The term "semi-curing" used in the present invention includes all conditions of incomplete curing which does not satisfy complete curing. In the present step, preferably, the functional coating layer formed in the previous step is dried or semi-cured such that it does not flow. However, the functional coating layer may be completely cured, if necessary.

Drying may be carried out by, for example, natural drying, heat drying or hot-air drying. Curing may be carried out by a method such as heat or UV application.

Preferably or optionally, after the functional coating layer is dried or cured, an adhesive layer may be formed on the functional coating layer. When the adhesive layer is formed, the subsequent step of transferring the functional coating layer to an optical lens may be facilitated. The adhesive layer is not particularly limited and may include an acrylic, urethane, urethane acrylic, EVA or vinyl adhesive, and functions to adhere the functional coating layer formed on the base film to an optical lens. After the adhesive layer is formed as described above, a protective film is attached to the adhesive layer and rolled, which can be stored for a predetermined period.

### Transferring dried or cured functional coating layer to optical lens

The functional coating layer dried or cured as described above is transferred to an optical lens by an ordinary transfer method. For example, transfer is carried out by placing the functional coating layer formed on a substrate on an optical lens and applying pressure or pressure and heat thereto. In this case, heat may be varied depending on the functional coating material and may commonly range from 10 to 300°C. When the functional coating layer is transferred to the optical lens and then the base film (including a release layer) is detached, an optical lens including a functional coating layer formed thereon is obtained.

The optical lens may be selected from various types of optical lenses without limitation of material or type. For example, a photochromic lens, a lens of eyeglasses for vision correction, sunglasses, sports goggles, industrial protective eyeglasses, a camera optical lens, a prism lens, an LED lens, an automobile headlight or the like is used as the optical lens in the present invention and the functional coating layer may be formed thereon. In particular, the optical lens includes a photochromic lens, a lens of eyeglasses for vision correction, sunglasses, sports goggles or the like. In terms of material for the optical lens, the optical lens may, for example, be a thiourethane optical lens, an acrylic optical lens, a thioepoxy optical lens, a diallylphthalate optical lens, a diarylcarbonate optical lens or the like. In particular, the method according to the present invention is suitable for forming photochromic coating on a thiourethane optical lens and a thioepoxy optical lens which are difficult to polymerize by mixing a photochromic material with a resin for forming a lens.

### Curing transferred functional coating layer

When the functional coating layer formed on the base film in the previous step is not completely cured, the functional coating layer is cured after transferring to the optical lens as described above. Curing may be carried out in the same manner as above by a method such as heat or UV application. Heat curing may be preferably carried out at 50 to 200°C, but curing temperature is not limited thereto. In the case of the photochromic coating layer, when the hardness of the coating layer is high, other coating layers such as hard coating and multi-coating layers can be formed easily, in particular, the multi-coating layer can advantageously be stably formed, but color change rate is lowered. On the other hand, when the hardness of the coating layer is excessively low, color change rate is increased, but the multi-coating layer formed thereon may be broken. Taking into consideration this point, those skilled in the art can control a curing degree depending on application or necessity.

After completion of formation of the functional coating layer on the optical lens as described above, another coating such as hard coating, multi-coating, photochromic coating, self-healing coating, water screen coating, or super-water repellent coating may be further formed thereon. The hard coating may be formed by coating a coating composition including, as main ingredients, at least one silane compound having a functional group such as an epoxy group, an alkoxy group or a vinyl group and at least one metal oxide colloid such as silicon oxide, titanium oxide, antimony oxide, tin oxide, tungsten oxide or aluminum oxide on the surface of an optical lens to a thickness of 0.5 to 10 µm by impregnation or spin coating, and then heating or UV curing to complete formation of a coating film. The multi-coating, that is, anti-reflective coating may be formed by vacuum-depositing or sputtering metal oxide such as silicon oxide, magnesium fluoride, aluminum oxide, zirconium oxide, titanium oxide, tantalum oxide, or yttrium oxide. In addition, water screen coating, super-water repellent coating or the like may be further performed, if necessary. In an embodiment of the present invention, when the functional coating layer is a photochromic coating layer, hard coating and multi-coating are sequentially formed thereon, and water screen coating is then formed thereon. In another embodiment, when the functional coating layer is a photochromic coating layer, hard coating is formed thereon, self-healing coating and multi-coating are sequentially formed thereon, and super-water repellent coating is then formed. In another embodiment, when the functional coating layer is a self-healing coating layer, hard coating, multi-coating and super-water repellent coating are sequentially formed thereon.

The optical lens including a functional coating layer formed thereon, obtained according to the present invention particularly includes a lens of eyeglasses and specifically includes a photochromic lens, a lens of eyeglasses for vision correction, sunglasses, sports goggles, industrial protective eyeglasses and the like. In addition, the optical lens of the present invention includes a camera optical lens, a prism lens, an LED lens, an automobile headlight or the like.

## Claims

1. A method of forming a functional coating layer on an optical lens comprising:
printing or coating a functional coating material on a base film to form a functional coating layer;
drying or curing the functional coating layer; and
transferring the dried or cured functional coating layer from the base film to an optical lens.

2. The method according to claim 1, wherein the drying or curing is carried out by drying the functional coating layer so as to allow the functional coating layer not to flow, or semi-curing the functional coating layer.

3. The method according to claim 1, wherein the transferring is carried out by applying pressure, or pressure and heat to the functional coating layer placed on the optical lens.

4. The method according to claim 1, further comprising, after the transferring, curing the functional coating layer transferred to the optical lens by heat or UV.

5. The method according to claim 1, further comprising, after the drying or curing, forming an adhesive layer on the dried or cured functional coating layer.

6. The method according to claim 1, wherein the transfer film comprises a base film and a release layer formed thereon.

7. The method according to claim 1, further comprising, after curing the functional coating layer, conducting at least one coating of hard coating, multi-coating, photochromic coating, self-healing coating, water screen coating and super-water repellent coating on the cured functional coating layer.

8. The method according to any one of claims 1 to 7, wherein the functional coating layer includes any one of a photochromic coating layer and a self-healing coating layer.

9. The method according to any one of claims 1 to 7, wherein the functional coating layer is a photochromic coating layer and comprises a photochromic compound and a binder.

10. The method according to claim 9, wherein the binder comprises one or more selected from acryl-, aryl-, urethane-, thiourethane-, epoxy-, thiosulfide- and EVA-based monomers, oligomers and polymers.

11. The method according to claim 10, wherein the acryl includes a compound represented by the following Formula 1 or Formula 2: 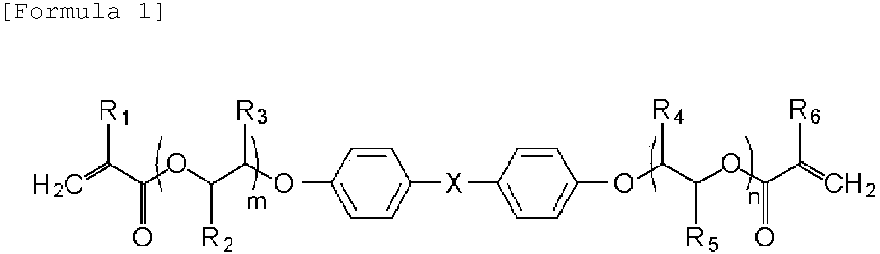
wherein R₁, R₂, R₃, R₄, R₅ and R₆ represent H or CH₃;
X represents C₁ to C₄ straight alkyl, C(CH₃)₂, C(CH₃)(C₆H₅) or C(CH₃)₂-C₆H₄-C(CH₃)₂; and
m+n is 2 to 5, 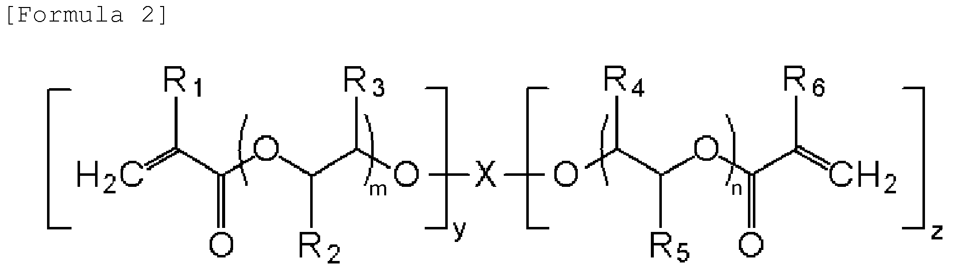
wherein R₁, R₂, R₃, R₄, R₅ and R₆ represent H or CH₃;
m represents 0 to 5, n represents 0 to 5, m+n is 0 to 6;
y represents 0 to 5, z represents 0 to 5, y+z is 1 to 6; and
X represents a C₁ to C₁₆ aliphatic moiety, a C₁ to C₁₆ aliphatic moiety containing one or more hydroxyl groups, a C₁ to C₁₆ aliphatic moiety containing one or more nitrogen or oxygen atoms, a C₁ to C₁₆ aliphatic moiety containing one or more hydroxyl groups and one or more nitrogen or oxygen atoms, a cyclic moiety, or a heterocyclic moiety containing one or more oxygen atoms.

12. The method according to claim 8, wherein the optical lens comprises any one of a thiourethane optical lens, an acrylic optical lens, a thioepoxy optical lens, a diallylphthalate optical lens and a diarylcarbonate optical lens.

13. An optical lens including a functional coating layer formed thereon, obtained by the method according to any one of claims 1 to 7.

14. The optical lens according to claim 13, wherein the optical lens comprises any one of a photochromic lens, a lens of eyeglasses for vision correction, sunglasses, sports goggles, industrial protective eyeglasses, a camera optical lens, a prism lens, an LED lens and an automobile headlight.
